# EUROPÄISCHE PATENTSCHRIFT

(11) **EP 1 903 352 B1**
(45) Veröffentlichungstag und Bekanntmachung des Hinweises auf die Patenterteilung: **18.12.2013**
(21) Anmeldenummer: 07015891.0
(22) Anmeldetag: 13.08.2007
(51) Int. Cl.: G01S 7/481

(54) **Optoelektronische Sensoreinheit und Verfahren zum Betreiben einer optoelektronischen Sensoreinheit**
Opto-electronic sensor unit and method for operating an opto-electronic sensor unit
Capteur optoélectronique et procédé d'opération d'un capteur optoélectronique

(30) Priorität: 19.09.2006 DE 102006043977
(43) Veröffentlichungstag der Anmeldung: 26.03.2008
(73) Patentinhaber: SICK AG, 79183 Waldkirch/Breisgau (DE)
(72) Erfinder: Ringwald, Siegfried, 79215 Elzach (DE); Hippenmeyer, Heinrich, 79348 Freiamt (DE)
(74) Vertreter: Manitz, Finsterwald & Partner GbR

(56) Entgegenhaltungen:
- EP-A- 0 066 889
- EP-A- 1 342 989
- DE-A1- 3 422 232
- DE-A1- 3 633 681
- DE-A1- 4 122 623
- DE-A1- 10 356 415
- DE-A1- 19 520 167
- DE-A1-102005 006 724
- FR-A- 2 733 327
- US-A- 5 450 231
- US-A1- 2005 225 743
- ULRICH MESCHEDER, GERGÖ SOMOGYI, MARKUS FREUDENREICH, CARLOS ESTAN: "Mikrotechnisch hergestellter Membranspiegel für aktive Fokussierung" HORIZONTE 27, Dezember 2005 (2005-12), Seiten 16-20, XP002452923 ISSN: 1432-9174 Gefunden im Internet: URL:http://www.koord.fh-mannheim.de/horizo nte/h27_MeschederAutofocus.pdf> [gefunden am 2007-09-25]

## Beschreibung

Die Erfindung betrifft eine optoelektronische Sensoreinheit mit wenigstens einer Sendeeinheit zur Abstrahlung von Detektionslicht in einen Detektionsbereich und wenigstens einer Empfangseinheit zum Nachweis von aus dem Detektionsbereich reflektiertem oder remittiertem Detektionslicht, und Verfahren zum Betreiben einer solchen optoelektronischen Sensoreinheit.

Optoelektronische Sensoreinheiten werden zum Beispiel eingesetzt, um den Abstand eines Objektes von der Sensoreinheit zu bestimmen. So sind Sensoren bekannt, die nach dem Triangulationsprinzip arbeiten, wie es zum Beispiel in EP 12111478 A2 beschrieben ist. Dabei wird ein ausgesandter Lichtfleck auf dem Objekt abgebildet, dessen Abstand bestimmt werden soll, und vom Objekt auf einen ortsauflösenden Empfänger abgebildet. Die Position des reflektierten und/oder remittierten Lichtflecks auf dem Empfänger ist von dem auch als Tastweite bezeichneten Abstand zwischen dem Sensor und dem Objekt abhängig und kann somit als ein Maß für den zu bestimmenden Abstand verwendet werden. Dabei besteht die Gefahr, dass bei nachzuweisenden Objekten im Nahbereich, das heißt wenn sich das Objekt nahe der Empfangsoptik befindet, aufgrund des Triangulationseffektes das empfangene Licht nicht mehr oder nur zu einem geringen Teil auf die aktive Fläche des Empfangselementes eingekoppelt wird.

Andere Entfernungsmesseinrichtungen werten zum Beispiel die Laufzeit des Detektionslichtes von der Sendeinheit über das zu detektierende Objekt zur Empfangseinheit aus, um die Entfernung des Objektes zu berechnen. Zum Beispiel bei der Detektion stark reflektierender Objekte oder von Objekten, die sich sehr nahe an der Empfangsoptik befinden, kann es dabei zu einer sehr hohen Signalleistungsdichte am Detektor und damit zu einer unerwünscht hohen Signaldynamik am Empfängerfrontend kommen. So erhöht sich die Signaldynamik indirekt proportional zum Quadrat des Abstandes, so dass die unerwünscht hohe Signaldynamik überproportional mit dem abnehmenden Abstand zunimmt.

Andere optoelektronische Sensoreinheiten dienen als Objektfeststellungssensor und somit der Feststellung, ob sich ein Objekt in einem Überwachungsbereich befindet oder nicht, wie es zum Beispiel in DE 102 31 178 A1 beschrieben ist.

Schließlich werden optoelektronische Sensoren zum Beispiel auch in Abtastscannern, wie zum Beispiel Barcodelesern, eingesetzt.

Auch bei diesen Anwendungen kann es dazu kommen, dass zum Beispiel bei stark reflektierenden Objekten oder Objekten, die sich nahe an der Empfangsoptik der optoelektronischen Einheit befinden, ein Signal sehr hoher Leistungsdichte auf das Empfangselement trifft und so eine genaue Auswertung erschwert sein kann.

In DE 36 33 681 A1 ist eine Vorrichtung zur Bestimmung der Entfernung von Körpern unter Einsatz eines Triangulationsverfahrens beschrieben. Es werden mehrere Lichtquellen und mehrere Retroreflektoren an den zu detektierenden Gegenständen eingesetzt, die in unterschiedlichen Wellenlängen aktiv sind. Das retroreflektierte Licht wird mit Hilfe eines Objektives fokussiert.

Eine Abstandsmessvorrichtung, die die Laufzeit zur Bestimmung des Abstandes verwendet, ist in US 6,545,749 B1 beschrieben, wobei reflektiertes Licht mit Hilfe einer Linse auf einen Lichtleiter fokussiert wird, der das Licht zu einem Sensor führt.

Bei einem Laserscansystem der EP 1 321 777 A2, das die Entfernung aus der Laufzeit ermittelt, wird eine Strahldivergenz durch vorgeschaltete optische Systeme verändert.

Ein optoelektronischer Sensor mit den Merkmalen des Oberbegriffes des Anspruchs 1 ist aus DE 41 22 623 A1 bekannt.

Aufgabe der vorliegenden Erfindung ist es, eine optoelektronische Sensoreinheit und Verfahren zum Betreiben optoelektronischer Sensoreinheiten anzugeben, mit deren Hilfe eine bessere Anpassung an die aktuellen Gegebenheiten und Bedingungen möglich ist.

Diese Aufgabe wird mit einer optoelektronischen Sensoreinheit mit den Merkmalen des Anspruches 1 und Verfahren zum Betreiben eines optoelektronischen Sensors mit den Merkmalen des Anspruches 11 gelöst. Unteransprüche sind auf bevorzugte Ausgestaltungen gerichtet.

Eine erfindungsgemäße optoelektronische Sensoreinheit zeichnet sich durch wenigstens ein brennweitenveränderbares optisches Element im Strahlengang des Detektionslichtes zwischen der wenigstens einen Sendeeinheit und dem Detektionsbereich aus, wobei das brennweitenveränderbare optische Element einen Reflektor mit einstellbarer Brennweite umfasst.

Eine erfindungsgemäße optoelektronische Sensoreinheit kann zum Beispiel einen Objektfeststellungssensor, einen Distanzsensor, der aus der Laufzeit des Detektionslichtes auf die Entfernung eines Objektes zurückschließt, eine Triangulationssensoreinheit oder einen Abtastscanner umfassen.

Mit Hilfe des brennweitenveränderbaren optischen Elementes kann das Detektionslicht, das zum Beispiel zur Bestimmung des Abstandes oder des Vorhandenseins eines Gegenstandes im Detektionsbereich eingesetzt wird, gezielt fokussiert oder aufgeweitet werden.

Der Reflektor mit einstellbarer Brennweite ist zwischen Sendelichtquelle und Detektionsbereich angeordnet. Dadurch lässt sich der Lichtfleck, den die Sendeeinheit auf das zu detektierende Objekt schickt, in seiner Größe variieren. Dies beeinflusst analog die Größe des Lichtflecks, der vom Objekt durch die Empfängerlinse auf dem Empfängerelement abgebildet wird.

Bei einer besonders vorteilhaften Ausgestaltung wird als brennweitenveränderbares optisches Element ein Membranspiegel mit einstellbarer Brennweite verwendet, wie er zum Beispiel von U. Mescheder et al. in "Mikrotechnisch hergestellter Membranspiegel für aktive Fokussierung", Horizonte 27, Dezember 2005, S. 16 bis 20 beschrieben ist. Solche zum Beispiel parabolisch geformten Membranspiegel ermöglichen auf einfache Weise durch Änderung der Spiegelkrümmung eine Änderung der Brennweite.

Handelt es sich bei der erfindungsgemäßen optoelektronischen Sensoreinheit zum Beispiel um einen Objektfeststellungssensor, so ist vorteilhafterweise eine Auswerteeinrichtung vorgesehen, die derart ausgestaltet ist, aus dem Signal der wenigstens einen Empfangseinheit auf das Vorhandensein bzw. des Nichtvorhandenseins eines Objektes im Detektionsbereich zu schließen und ein entsprechendes Ausgabesignal zu erzeugen.

Handelt es sich bei der erfindungsgemäßen optoelektronischen Sensoreinheit um einen Triangulationssensor, so weist die eine Empfangseinheit wenigstens ein ortsauflösendes lichtempfindliches Element auf. Eine Auswerteeinrichtung kann vorgesehen sein, die derart ausgestaltet ist, aus der Position des empfangenen Lichtsignals an der wenigstens einen Empfangseinheit auf die Distanz eines Objektes im Detektionsbereich zu schließen.

Handelt es sich bei der optoelektronischen Sensoreinheit um einen Lichtlaufzeit-Distanzsensor, so kann eine Auswerteeinrichtung vorgesehen sein, die aus der Laufzeit des Detektionsimpulses auf die Entfernung eines Objektes von der optoelektronischen Sensoreinheit in dem Detektionsbereich schließen kann.

Andere Ausgestaltungen sehen zum Beispiel die Verwendung hochfrequenzmodulierten Sendelichtes vor, wobei die Phasenlage des Empfangslichtes in Bezug zu der Phasenlage des Sendelichtes geprüft wird, um auf den Abstand eines Objektes im Detektionsbereich zurückschließen zu können, was ebenfalls einer Laufzeitmessung entspricht.

Eine erfindungsgemäße optoelektronische Sensoreinheit kann eine Steuereinrichtung aufweisen, mit deren Hilfe der Reflektor auf eine gewünschte Brennweite eingestellt werden kann. Die Steuereinrichtung kann dazu zum Beispiel das Signal der Auswerteeinrichtung in geeigneter Weise auswerten.

Bei einer erfindungsgemäßen optoelektronischen Sensoreinheit ist ein Lichtauskoppelkanal vorgesehen, wobei ein brennweitenveränderbares optisches Element derart angeordnet ist, dass bei Einstellung einer geeigneten ersten Brennweite das von der wenigstens einen Sendeeinheit ausgesendete Licht im Wesentlichen in den Lichtauskoppelkanal gesendet wird und bei Einstellung einer anderen, zweiten Brennweite das Detektionslicht im Wesentlichen in den Detektionsbereich gesendet wird. Dies ermöglicht ein einfaches Signalmultiplexen zwischen dem Detektionsbereich und einem anderen Raumbereich.

Bei einer vorteilhaften Weiterbildung ist ein optischer Sumpf vorgesehen, der in einem Zustand, in dem die zweite Brennweite eingestellt ist, verhindert, dass Detektionslicht in den Lichtauskoppelkanal gelenkt wird. Ein solcher optischer Sumpf kann zum Beispiel durch einen nichtreflektierenden Bereich an dem brennweitenveränderbaren optischen Element gebildet werden. Eine besonders sichere und wirkungsvolle Ausgestaltung des optischen Sumpfes kann durch eine Blende bewirkt werden, die im Sendelichtpfad vorgesehen ist und zum Beispiel eine Glasplatte mit einem lichtundurchlässigen Punkt umfasst, der derart angeordnet ist, dass Sendelicht abgeschattet wird, das in einem Zustand, in dem die zweite Brennweite eingestellt ist, auf den Lichtauskoppelkanal fallen würde.

Eine einfache Ausgestaltung sieht vor, dass der Lichtauskoppelkanal durch einen Lichtleiter gebildet wird.

Mit dem erfindungsgemäßen Einsatz eines brennweitenveränderbaren optischen Elementes lässt sich auf einfache Weise eine Referenzmessung implementieren. Bei geeigneter räumlicher Anordnung kann durch Veränderung der Brennweite erreicht werden, dass das Licht der Sendeeinheit in einen Referenzkanal gelenkt wird, ohne den Detektionsbereich zu erreichen, so dass eine Referenzmessung durchgeführt werden kann. Zum Beispiel kann zur Referenzmessung eine entsprechende Fokussierung auf den Referenzlichtkanal vorgenommen werden. Gezielte Defokussierung mit Hilfe des brennweitenveränderbaren Elementes kann dann ausgenutzt werden, um das von der Sendeeinheit ausgesendete Licht in den Detektionsbereich abzustrahlen und zur Messung zu verwenden. Durch geeignet z. B. an dem brennweitenveränderbaren optischen Element oder an anderer Stelle im Strahlengang vorgesehene geschwärzte Bereiche oder Durchbrüche kann außerdem erreicht werden, dass in dieser defokussierten Einstellung des brennweitenveränderbaren optischen Elementes kein Licht in Richtung des Referenzkanals strahlt. Einsetzbar ist zum Beispiel auch ein optischer Sumpf, wie er oben beschrieben ist, insbesondere eine entsprechend mit einem lichtundurchlässigen Bereich versehene Glasplatte. Bei der Implementierung einer solchen erfindungsgemäßen Referenzmessung kann als brennweitenveränderbares Element nicht nur ein Reflektor mit einstellbarer Brennweite, sondern auch ein anderes brennweitenveränderbares optisches Element im Strahlengang des Detektionslichtes eingesetzt werden, zum Beispiel ein entsprechend verstellbares Linsensystem.

Die Aufgabe wird auch durch ein Verfahren zum Betreiben eines optoelektronischen Sensors gelöst, bei dem mit Hilfe des brennweitenveränderbaren optischen Elementes die Konvergenz des Detektionslichtes derart eingestellt, insbesondere fokussiert, wird, dass es möglichst vollständig auf einen Referenzkanal trifft, wenn eine Referenzmessung durchgeführt werden soll. Die Konvergenz des Detektionslichts wird andererseits derart eingestellt, insbesondere defokussiert, dass es möglichst vollständig in den Detektionsbereich gesendet wird, wenn eine Detektionsmessung durchgeführt wird.

Durch die gezielte Defokussierung bei der Durchführung dieses Verfahrens wird erreicht, dass das Detektionslicht an dem Referenzkanal vorbei in den Detektionsbereich trifft. Zum Beispiel durch einen optischen Sumpf kann erreicht werden, dass dabei kein Detektionslicht in den Referenzkanal gelenkt wird.

Mit diesem geschilderten erfindungsgemäßen Verfahren ist auch ein Umschalten zwischen zwei Kanälen möglich, ohne dass es sich dabei notwendigerweise um einen Mess- und einen Referenzkanal handeln müsste.

Weitere Vorteile, bevorzugte Ausgestaltungen des erfindungsgemäßen Verfahrens und deren Vorteile ergeben sich in analoger Weise entsprechend den geschilderten Vorteilen und Ausgestaltungen eines erfindungsgemäßen optoelektronischen Sensors.

Bevorzugte Ausgestaltungen der Erfindung werden im Folgenden anhand der beiliegenden Figuren im Detail erläutert.
- Fig. 1: zeigt in schematischer Darstellung eine Anordnung zur Messung der Distanz eines Objektes in einem Detektionsbereich,
- Fig. 2: zeigt in schematischer Darstellung die Anordnung in einem anderen Betriebszustand,
- Fig. 3: zeigt in schematischer Darstellung eine Anordnung zur Messung der Distanz eines Objektes in einem Detektionsbereich mit einem Triangulationsverfahren,
- Fig. 4: zeigt in schematischer Darstellung die Anordnung der Fig. 3 in einem anderen Betriebszustand,
- Fig. 5: zeigt in schematischer Darstellung eine erfindungsgemäße Anordnung mit einer Referenzlichtmessung,
- Fig. 6: zeigt in schematischer Darstellung die Anordnung der Fig. 5 in einem anderen Betriebszustand,
- Fig. 7: zeigt in schematischer Darstellung eine andere erfindungsgemäße Anordnung mit einer Referenzlichtmessung, und
- Fig. 8: zeigt in schematischer Darstellung die Anordnung der Fig. 7 in einem anderen Betriebszustand.

Gleiche, ähnliche oder funktionsähnliche Elemente sind mit gleichen Bezugsziffem gekennzeichnet.

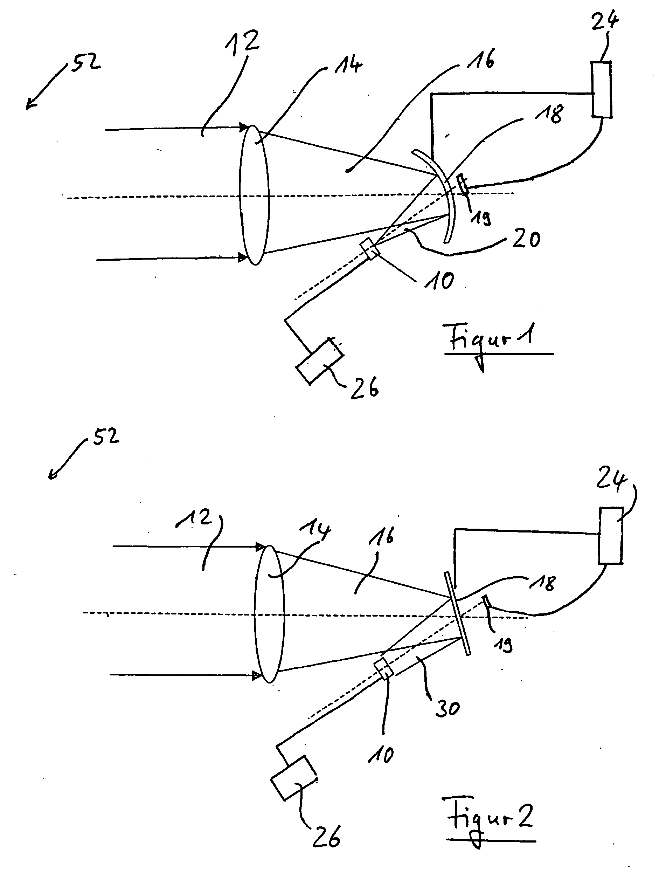

Fig. 1 zeigt in schematischer Darstellung den Ausschnitt aus einer Anordnung zur Messung der Distanz eines nicht dargestellten Objektes in einem Detektionsbereich 52. Insbesondere ist die Empfangsoptik dargestellt. Bezugsziffer 12 bezeichnet Licht, das zum Beispiel nach Reflexion an dem Objekt aus dem Detektionsbereich 52 auf die Empfangslinse 14 trifft. Bezugsziffer 16 bezeichnet das von der Empfangslinse 14 kollimierte Licht. Der Membranspiegel 18 besteht zum Beispiel aus kristallinem Silizium und ist gegenüber einer Gegenelektrode 19 angeordnet. Der Membranspiegel 18 und die Gegenelektrode 19 sind mit einer Steuerung 24 verbunden, die in an sich für Membranspiegel bekannter Weise entsprechende Potenziale erzeugen kann, die zu einem elektrischen Feld zwischen dem Membranspiegel 18 und der Gegenelektrode 19 führen. Anlegen eines geeigneten Potenzials an die Gegenelektrode 19 führt insbesondere zur Verformung des Membranspiegels 18. Fig. 1 zeigt den Zustand, in dem ein anziehendes Potential zwischen Gegenelektrode 19 und Membranspiegel 18 eingestellt ist und der Membranspiegel gekrümmt ist. Vom Membranspiegel 18 wird das Licht 16 in den Strahlengang 20 zu einer Empfangseinheit 10 abgelenkt, die mit einer Auswerteelektronik 26 verbunden ist und zum Beispiel eine Photodiode umfasst. Die Auswerteelektronik kann in noch zu erläuternder Weise mit der Steuerung 24 zusammenwirken.

Fig. 2 zeigt die Anordnung mit entspanntem Membranspiegel 18, so dass das von dem Membranspiegel 18 reflektierte Licht 30 weniger fokussiert ist und insofern eine größere Fläche bei geringerer Strahlungsleistungsdichte abdeckt.

Die Anordnung kann wie folgt eingesetzt werden. Von einer nicht gezeigten Sendelichteinheit wird Licht in Richtung des Detektionsbereiches 52 geschickt. Dort trifft es auf einen gegebenenfalls vorhandenen zu detektierenden Körper, der das Licht reflektiert. Das reflektierte Licht 12 tritt in beschriebener Weise in die Empfangsoptik ein. Von dem im Zustand der Fig. 1 gekrümmten Membranspiegel 18 wird das Licht auf einen Punkt der Empfangseinheit 10 reflektiert. Aus der Laufzeit des Detektionslichtes von der Sendelichteinheit bis zur Empfangseinheit 10 kann die Auswerteeinrichtung 26 unter Berücksichtigung der Lichtgeschwindigkeit zum Beispiel auf den Abstand des Objektes im Detektionsbereich 52 zurückschließen.

Insbesondere bei der Detektion stark reflektierender Gegenstände oder Gegenständen, die sehr nahe an der Empfangseinheit sind, kann es vorkommen, dass die Strahlungsleistungsdichte an der Empfangseinheit 10 sehr hoch und insofern die Messgenauigkeit eingeschränkt ist. Um ein solches "Überbelichten" zu verhindern, kann mit Hilfe des Membranspiegels 18 der Fokussierungsgrad des von ihm reflektierten Lichtes 20, 30 geändert werden. In Fig. 2 ist ein Zustand gezeigt, bei dem der Membranspiegel 18 entspannt ist, indem zum Beispiel das Potenzial auf der Gegenelektrode 19 zu Null eingestellt wurde. Das von dem Membranspiegel 18 reflektierte Licht 30 ist weniger fokussiert und deckt dementsprechend eine größere Fläche bei geringerer Leistungsdichte ab. Auf diese Weise ist eine Pegelanpassung möglich.

Die Pegelanpassung kann manuell an der Steuerung 24 durch Anlegen entsprechender Potenziale an den Membranspiegel 18 bzw. die Gegenelektrode 19 eingestellt werden. In nicht gezeigter Weise kann aber auch die Auswerteeinrichtung 26 mit der Steuereinheit 24 verbunden werden, um bei einem zu hohen Leistungspegel automatisch eine entsprechende Einstellung des Membranspiegels zu bewirken. Ebenso kann die Steuereinheit ausgestaltet sein, um bei zu niedrigem Leistungspegel eine entsprechende Einstellung des Membranspiegels zu bewirken.

Durch geeignete Einstellung der Potentialdifferenz wischen Membranspiegel 18 und Gegenelektrode 19 können kontinuierlich unterschiedliche Krümmungen und damit Leistungsdichtepegel an der Empfangseinheit 10 eingestellt werden.

Bei einer anderen, nicht gezeigten Anordnung befindet sich das brennweitenveränderbare optische Element im Strahlengang des Sendelichtes auf dem Weg zum Detektionsbereich 52.

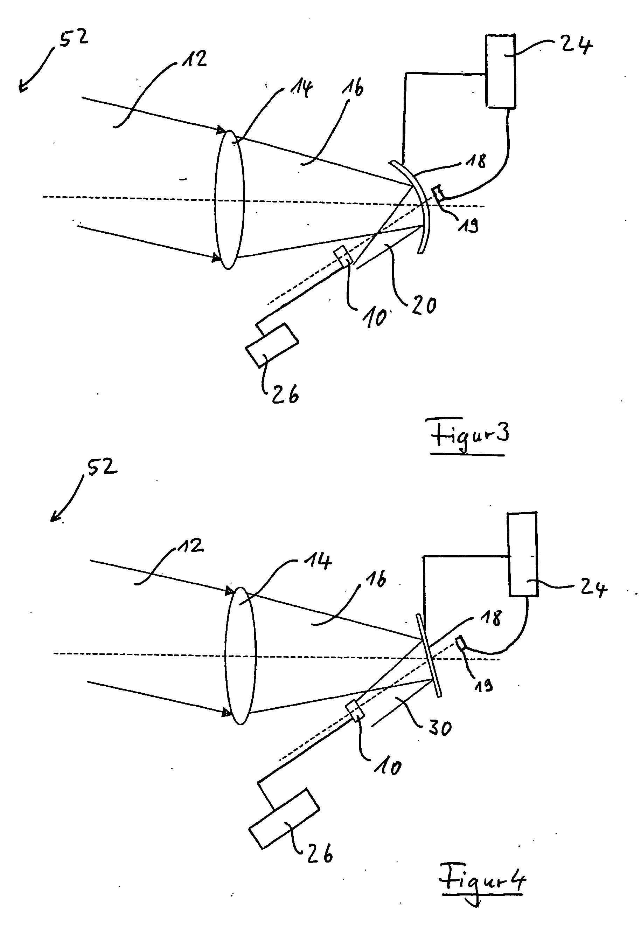

Die Fig. 3 und 4 zeigen ein Distanzmessgerät, das auf dem Triangulationsprinzip beruht. Sendelicht von einer nicht gezeigten Sendelichtquelle wird in Richtung des Detektionsbereichs 52 geschickt. Je nach Abstand des Objektes im Detektionsbereich 52 verändert sich in für Triangulationsverfahren an sich bekannter Weise der Winkel, unter dem das vom Objekt reflektierte Detektionslicht 12 auf die Empfangsoptik 14 fällt.

Das Empfangselement 10 ist hier als ortauflösender Detektor, zum Beispiel als eine Reihe oder eine Matrix von Fotodioden, ausgebildet. Aus dem Auftreffpunkt des Lichtes 20 auf dem Empfangselement 10 kann die Auswerteeinrichtung 26 auf den Abstand eines Objektes im Detektionsbereich 52 in an sich für Triangulationsverfahren bekannter Weise zurückschließen.

Insbesondere, wenn das zu detektierende Objekt sich sehr nah an der Empfangslinse 14 befindet, kann es bei solchen Verfahren vorkommen, dass das Licht 20 überhaupt nicht mehr auf die Empfangseinheit 10 trifft. Durch gezielte Aufweitung des von dem Membranspiegel 18 reflektierten Lichtes 20, 30 kann erreicht werden, dass dennoch eine ausreichende Menge Empfangslicht auf die Empfangseinheit 10 trifft, wie es in Fig. 4 dargestellt ist. Die Auswerteeinheit 26 berücksichtigt bei der Bestimmung des Abstandes nach dem Triangulationsverfahren die Stellung des Membranspiegels 18.

In den Figuren 3 bzw. 4 ist jeweils ein Zustand bei gekrümmtem Membranspiegel 18 bzw. entspanntem Membranspiegel 18 gezeigt. Die Erfindung ist aber nicht auf diese beiden Stellungen beschränkt. Bei entsprechender Anordnung der einzelnen Elemente können auch unterschiedliche Krümmungsradien verwendet werden, um das Licht entsprechend zu manipulieren.

In ähnlicher Weise wie für die Triangulationsmessung der Figuren 3 und 4 erläutert, kann durch die Verwendung eines brennweitenveränderbaren optischen Elements auch bei Systemen, die eine Lichtlaufzeitmessung durchführen und eine Optik mit Pupillenteilung aufweisen, im Nachbereich für eine sichere Lichteinkopplung gesorgt werden, um Blindbereiche zu vermeiden.

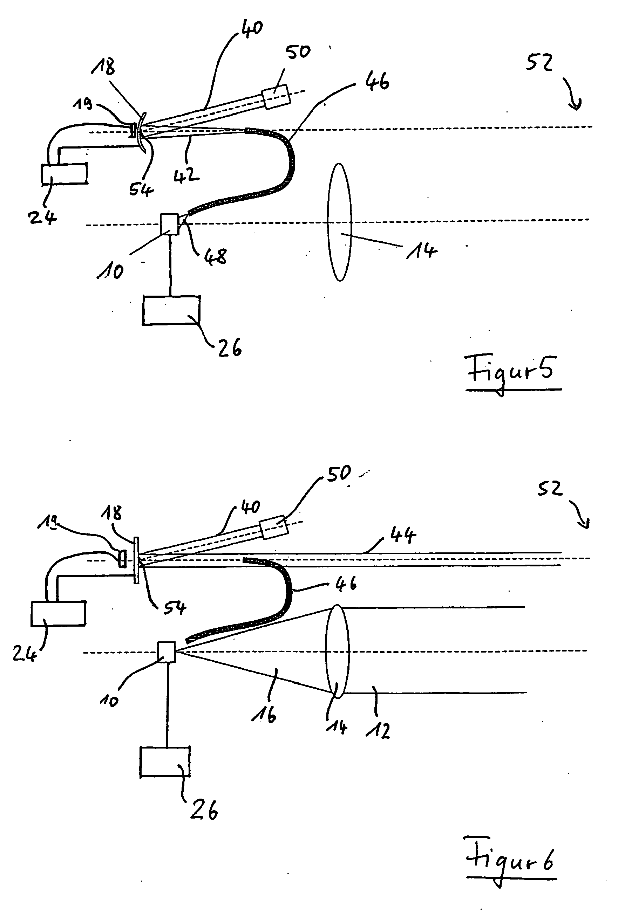

Die Fig. 5 und 6 zeigen eine erfindungsgemäße Anordnung, mit der eine Referenzlichtmessung möglich ist. Sendelicht 40 wird von einer Sendelichtquelle 50 ausgesendet. Bei gekrümmtem Membranspiegel 18 wird dieses Licht in einen kollimierten Strahlengang 42 abgelenkt, der vollständig auf einen Lichtleiter 46 trifft. Aus dem Lichtleiter tritt das Licht 48 auf die Empfangseinheit 10. In der in Fig. 5 gezeigten Anordnung wird das Licht der Sendelichtquelle 50 also vollständig durch den Lichtleiter 46 auf die Empfangseinheit 10 gelenkt und kann zur Referenzmessung verwendet werden.

Die tatsächliche Detektionsmessung ist in Fig. 6 dargestellt. Der Membranspiegel 18 ist entspannt, so dass ein Großteil des von ihm reflektierten Lichtes 44 in den Detektionsbereich 52 gelenkt wird. Dort wird es von einem gegebenenfalls vorhandenen Objekt reflektiert und trifft als reflektiertes Licht 12 auf die Empfangslinse 14 und wird durch diese im Strahlengang 16 auf die Empfangseinheit 10 kollimiert.

Auf dem Membranspiegel 18 ist ein geschwärzter Bereich 54 vorgesehen. In der Stellung des Membranspiegels 18, die in Fig. 6 gezeigt ist, zeigt sich, dass mit diesem "optischem Sumpf" verhindert wird, dass während der Detektionsmessung Licht auf den Referenzlichtleiter 46 gelenkt wird. Alternativ zu dem geschwärzten Bereich 54 kann eine Unterbrechung des Membranspiegels 18 an der entsprechenden Stelle vorgesehen sein.

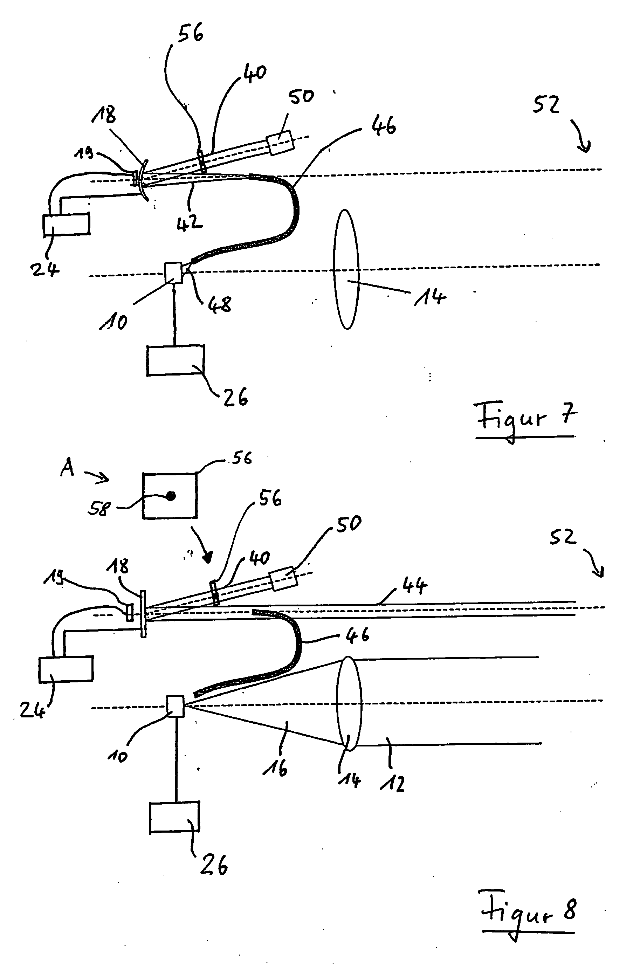

Der "optische Sumpf' muss nicht notwendigerweise mit dem Membranspiegel 18 verbunden sein oder Teil von ihm sein, solange er wirksam verhindert, dass während der Reflektionsmessung Licht auf den Referenzlichtleiter gelenkt wird. Zum Beispiel kann anstelle des geschwärzten Bereiches 54, der an dem Membranspiegel 18 vorgesehen ist, eine als Blende ausgestaltete Glasplatte 56 im Strahlengang verwendet werden, auf der ein lichtundurchlässiger Bereich 58 vorgesehen ist. Eine solche Ausgestaltung ist Gegenstand der Fig. 7 und 8, die ansonsten der Ausgestaltung der Fig. 5 und 6 entspricht. Durch den lichtundurchlässigen Bereich 58 wird verhindert, dass während der Detektionsmessung, die in Fig. 8 dargestellt ist, Licht auf den Referenzlichtleiter 46 gelenkt wird.

In Fig. 8 ist dabei als Insert "A" zusätzlich eine Draufsicht auf die Glasplatte 56 in Richtung des Sendelichts 40 gezeigt.

Sowohl die erfindungsgemäße Ausgestaltung der Fig. 5 und 6 als auch die erfindungsgemäße Ausgestaltung der Fig. 7 und 8 zeigen Beispiele des Signalmultiplexens zwischen Messkanal und Referenzkanal, das mit einem erfindungsgemäß verwendeten brennweitenveränderbaren optischen Element ermöglicht wird.

Analog ist ein Signalmultiplexen zwischen mehreren Kanälen möglich, ohne dass es sich dabei um einen Mess- oder einen Referenzkanal handeln müsste.

Ein Signalmultiplexen zwischen mehreren Kanälen, insbesondere zwischen Messkanal und Referenzkanal, gemäß den Ausgestaltungen der Fig. 5 und 6 einerseits bzw. der Fig. 7 und 8 andererseits ist auch unter Verwendung eines anderen brennweitenveränderbaren optischen Elementes möglich, zum Beispiel eines entsprechend verstellbaren Linsensystems.

Die erfindungsgemäße Anwendung der aktiven Optik ermöglicht eine Fokusverstellung, mit welcher sich eine Kanaltrennung bzw. eine schnelle Kanalumschaltung zum Beispiel zwischen Messpfad und Referenzpfad erreichen lässt.

### Bezugszeichenliste.

- 10: Empfangseinheit
- 12: aus dem Detektionsbereich reflektiertes Licht
- 14: Empfangslinse
- 16: von der Empfangslinse kollimiertes Licht
- 18: Membranspiegel
- 19: Gegenelektrode
- 20: von dem Membranspiegel reflektiertes Licht
- 24: Steuerung
- 26: Auswerteeinrichtung
- 30: von dem Membranspiegel reflektiertes Licht
- 40: Sendelicht
- 42: von dem Membranspiegel reflektiertes Licht
- 44: Detektionslicht
- 46: Lichtleiter
- 48: Referenzlicht
- 50: Sendeeinheit
- 52: Detektionsbereich
- 54: geschwärzter Bereich
- 56: Glasplatte
- 58: lichtundurchlässiger Bereich

## Patentansprüche

1. Optoelektronische Sensoreinheit mit
- wenigstens einer Sendeeinheit (50) zur Abstrahlung von Detektionslicht in einen Detektionsbereich (52),
- wenigstens einer Empfangseinheit (10) zum Nachweis von aus dem Detektionsbereich (52) reflektiertem oder remittiertem Detektionslicht, und
- wenigstens einen Reflektor (18) mit einstellbarer Brennweite im Strahlengang des Detektionslichtes zwischen der wenigstens einen Sendeeinheit (50) und dem Detektionsbereich (52)
**gekennzeichnet durch**
einen Lichtauskoppelkanal (46), wobei der Reflektor (18) mit einstellbarer Brennweite derart angeordnet ist, dass bei Einstellung einer geeigneten ersten Brennweite das von der wenigstens einen Sendeeinheit (50) ausgesendete Licht im wesentlichen in den Lichtauskoppelkanal (46) gesendet wird, und bei Einstellung einer anderen, zweiten Brennweite das Detektionslicht im wesentlichen in den Detektionsbereich (52) gesendet wird.

2. Optoelektronische Sensoreinheit nach Anspruch 1, **dadurch gekennzeichnet, dass** der Reflektor mit einstellbarer Brennweite ein Membranspiegel (18) ist.

3. Optoelektronische Sensoreinheit nach einem der Ansprüche 1 oder 2, **dadurch gekennzeichnet, dass** es sich um einen Objektfeststellungssensor handelt und vorzugsweise eine Auswerteeinrichtung (26) vorgesehen ist, die derart ausgestaltet ist, aus dem Signal der wenigstens einen Empfangseinheit (10) auf das Vorhandensein bzw. das Nichtvorhandensein eines Objektes im Detektionsbereich (52) zu schließen und ein entsprechendes Ausgabesignal zu erzeugen.

4. Optoelektronische Sensoreinheit nach einem der Ansprüche 1 oder 2, **dadurch gekennzeichnet, dass** es sich um einen Triangulationssensor zur Feststellung des Abstandes eines Gegenstandes von der optoelektronischen Sensoreinheit im Detektionsbereich (52) handelt, wobei die wenigstens eine Empfangseinheit (10) ein ortsauflösendes lichtempfindliches Element umfasst und vorzugsweise eine Auswerteeinrichtung (26) vorgesehen ist, die derart ausgestaltet ist, aus der Position des empfangenen Lichtsignals an der wenigstens einen Empfangseinheit (10) auf die Distanz eines Objektes in dem Detektionsbereich (52) zu schließen und ein entsprechendes Ausgabesignal zu erzeugen.

5. Optoelektronische Sensoreinheit nach einem der Ansprüche 1 oder 2, **dadurch gekennzeichnet, dass** es sich um einen Distanzsensor handelt und vorzugsweise eine Auswerteeinrichtung (26) vorgesehen ist, die derart ausgestaltet ist, aus der Laufzeit des Detektionslichtes auf die Entfernung eines Objektes von der optoelektronische Sensoreinheit in dem Detektionsbereich (52) zu schließen und ein entsprechendes Ausgabesignal zu erzeugen.

6. Optoelektronische Sensoreinheit nach einem der Ansprüche 1 oder 2, **dadurch gekennzeichnet, dass** es sich um einen Abtastscanner handelt.

7. Optoelektronische Sensoreinheit nach einem der Ansprüche 1 bis 6, **gekennzeichnet durch** eine Einrichtung im Strahlengang zwischen der wenigstens einen Sendeeinheit (50) und dem Lichtauskoppelkanal (46) zur Verhinderung des Auftreffens von Sendelicht auf den Lichtauskoppelkanal (46), wenn die zweite Brennweite eingestellt ist.

8. Optoelektronische Sensoreinheit nach einem der Ansprüche 1 bis 7, **dadurch gekennzeichnet, dass** der Lichtauskoppelkanal einen Referenzkanal bildet, der bei Einstellung der ersten Brennweite das von der wenigstens einen Sendeeinheit (50) ausgesendete Licht in Richtung der wenigstens einen Empfangseinheit (10) leitet.

9. Optoelektronische Sensoreinheit nach einem der Ansprüche 1 bis 8, **dadurch gekennzeichnet, dass** der Lichtauskoppelkanal einen Lichtleiter (46) umfasst.

10. Optoelektronische Sensoreinheit nach den Ansprüchen 8 und 9, **dadurch gekennzeichnet, dass** eine Öffnung des Lichtleiters (46) sich im Strahlengang des Detektionslichtes befindet und die andere Öffnung des Lichtleiters in Richtung der wenigstens einen Empfangseinheit (10) weist.

11. Verfahren zum Betreiben eines optoelektronischen Sensors, bei dem Detektionslicht von wenigstens einer Sendeeinheit (50) in einen Detektionsbereich (52) gesendet wird und aus dem Detektionsbereich reflektiertes oder remittiertes Detektionslicht mit wenigstens einer Empfangseinheit (10) nachgewiesen wird,
**dadurch gekennzeichnet, dass**
mit Hilfe wenigstens eines Reflektors (18) mit einstellbarer Brennweite im Strahlengang des Detektionslichtes (i) die Konvergenz des Detektionslichtes derart eingestellt wird, insbesondere fokussiert wird, dass es möglichst vollständig auf einen Referenzkanal (46) trifft, wenn eine Referenzmessung durchgeführt wird, und (ii) die Konvergenz des Detektionslichtes derart eingestellt wird, insbesondere defokussiert wird, dass es möglichst vollständig in den Detektionsbereich (52) gesendet wird, wenn eine Detektionsmessung durchgeführt wird.

12. Verfahren nach Anspruch 11, **dadurch gekennzeichnet, dass** während der Detektionsmessung Detektionslicht, das auf den Referenzkanal (46) treffen würde, ausgeblendet wird.

13. Verfahren nach einem der Ansprüche 11 oder 12, **dadurch gekennzeichnet, dass** als Reflektor ein Membranspiegel (18) mit einstellbarer Brennweite verwendet wird.

14. Verfahren nach einem der Ansprüche 11 bis 13, **dadurch gekennzeichnet, dass** das von der Empfangseinheit (10) empfangene Detektionssignal ausgewertet wird, um festzustellen, ob sich im Detektionsbereich (52) ein Objekt befindet.

15. Verfahren nach einem der Ansprüche 11 bis 13, **dadurch gekennzeichnet, dass** das von der Empfangseinheit (10) empfangene Detektionssignal ausgewertet wird, um die Entfernung eines Gegenstandes von dem optoelektronischen Sensor zu bestimmen.

16. Verfahren nach Anspruch 15, **dadurch gekennzeichnet, dass** die Entfernung unter Ausnutzung eines Triangulationsverfahrens bestimmt wird.

17. Verfahren nach Anspruch 15, **dadurch gekennzeichnet, dass** die Entfernung aus der Laufzeit des Detektionssignals von der wenigstens einen Sendeeinheit zu der wenigstens einen Empfangseinheit (10) bestimmt wird.

## Claims

1. An optoelectronic sensor unit comprising
- at least one transmission unit (50) for radiating detection light into a detection zone (52);
- at least one reception unit (10) for detecting detection light reflected or remitted from the detection zone (52); and
- at least one reflector (18) having an adjustable focal length in the beam path of the detection light between the at least one transmission unit (50) and the detection zone (52),
**characterised by**
a light decoupling channel (46), wherein the reflector (18) having an adjustable focal length is arranged such that the light transmitted by the at least one transmission unit (50) is substantially transmitted into the light decoupling channel (46) on a setting of a suitable first focal length and is substantially transmitted into the detection zone (52) on a setting of another, second focal length.

2. An optoelectronic sensor unit in accordance with claim 1, **characterised in that** the reflector having an adjustable focal length is a membrane mirror (18).

3. An optoelectronic sensor unit in accordance with one of the claims 1 or 2, **characterised in that** it is an object determination sensor; and **in that** an evaluation device (26) is preferably provided which is configured so as to draw a conclusion on the presence or absence of an object in the detection zone (52) from the signal of the at least one reception unit (10) and to generate a corresponding output signal.

4. An optoelectronic sensor unit in accordance with one of the claims 1 or 2, **characterised in that** it is a triangulation sensor for determining the spacing of an object from the optoelectronic sensor unit in the detection zone (52), wherein the at least one reception unit (10) comprises a spatially resolving light-sensitive element; and wherein an evaluation unit (26) is preferably provided which is configured so as to draw a conclusion on the distance of an object in the detection zone (52) from the position of the received light signal at the at least one reception unit (10) and to generate a corresponding output signal.

5. An optoelectronic sensor unit in accordance with one of the claims 1 or 2, **characterised in that** it is a distance sensor; and **in that** an evaluation device (26) is preferably provided which is configured so as to draw a conclusion on the distance of an object from the optoelectronic sensor unit in the detection zone (52) from the transit time of the detection light and to output a corresponding output signal.

6. An optoelectronic sensor unit in accordance with one of the claims 1 or 2, **characterised in that** it is a sampling scanner.

7. An optoelectronic sensor unit in accordance with any one of the claims 1 to 6, **characterised by** a device in the beam path between the at least one transmission unit (50) and the light decoupling channel (46) for preventing the incidence of transmitted light on the light decoupling channel (46) when the second focal length is set.

8. An optoelectronic sensor unit in accordance with any one of the claims 1 to 7, **characterised in that** the light decoupling channel forms a reference channel which conducts the light transmitted by the at least one transmission unit (50) in the direction of the at least one reception unit (10) on a setting of the first focal length.

9. An optoelectronic sensor unit in accordance with any one of the claims 1 to 8, **characterised in that** the light decoupling channel comprises an optical fibre (46).

10. An optoelectronic sensor unit in accordance with the claims 8 and 9, **characterised in that** an opening of the optical fibre (46) is located in the beam path of the detection light and the other opening of the optical fibre faces in the direction of the at least one reception unit (10).

11. A method of operating an optoelectronic sensor, wherein detection light is transmitted by at least one transmission unit (50) into a detection zone (52) and detection light reflected or remitted from the detection zone is detected using at least one reception unit (10),
**characterised in that**,
with the assistance of at least one reflector (18) having an adjustable focal length, (i) the convergence of the detection light is set, in particular focused, such that it is incident as completely as possible onto a reference channel (46) when a reference measurement is carried out and (ii) the convergence of the detection light is set, in particular defocused, such that it is transmitted as completely as possible into the detection zone (52) when a detection measurement is carried out.

12. A method in accordance with claim 11, **characterised in that** detection light which would be incident on the reference channel (46) is masked during the detection measurement.

13. A method in accordance with one of the claims 11 or 12, **characterised in that** a membrane mirror (18) having an adjustable focal length is used as the reflector.

14. A method in accordance with any one of the claims 11 to 13, **characterised in that** the detection signal received by the reception unit (10) is evaluated to determine whether an object is located in the detection zone (52).

15. A method in accordance with any one of the claims 11 to 13, **characterised in that** the detection signal received by the reception unit (10) is evaluated to determine the distance of an object from the optoelectronic sensor.

16. A method in accordance with claim 15, **characterised in that** the distance is determined while utilising a triangulation process.

17. A method in accordance with claim 15, **characterised in that** the distance is determined from the transit time of the detection signal from the at least one transmission unit to the at least one reception unit (10).

## Revendications

1. Unité à capteur optoélectronique comprenant
- au moins une unité émettrice (50) pour rayonner une lumière de détection dans une zone de détection (52),
- au moins une unité réceptrice (10) pour déceler une lumière de détection réfléchie ou réémise depuis la zone de détection (52), et
- au moins un réflecteur (18) avec une distance focale réglable dans le trajet du rayonnement de la lumière de détection entre ladite au moins une unité émettrice (50) et la zone de détection (52)
**caractérisée par**
un canal de découplage de lumière (46), dans laquelle le réflecteur (18) avec distance focale réglable est agencé de telle façon que lors du réglage d'une première distance focale appropriée, la lumière émise par ladite au moins une unité émettrice (50) est essentiellement émise dans le canal de découplage de lumière (46), et lors du réglage d'une autre seconde distance focale, la lumière de détection est émise essentiellement dans la zone de détection (52).

2. Unité à capteur optoélectronique selon la revendication 1, **caractérisée en ce que** le réflecteur avec distance focale réglable est un miroir à membrane (18).

3. Unité à capteur optoélectronique selon l'une des revendications 1 ou 2, **caractérisée en ce qu'**il s'agit d'un capteur de constatation d'objet et **en ce qu'**il est de préférence prévu un système d'évaluation (26) qui est conçu de manière à procéder, à partir du signal de ladite au moins une unité réceptrice (10) à une conclusion quant à la présence ou à l'absence d'un objet dans la zone de détection (52), et à engendrer un signal de sortie correspondant.

4. Unité à capteur optoélectronique selon l'une des revendications 1 ou 2, **caractérisée en ce qu'**il s'agit d'un capteur à triangulation pour constater la distance d'un objet depuis l'unité à capteur optoélectronique dans la zone de détection (52), dans laquelle ladite au moins une unité réceptrice (10) comprend un élément photosensible à résolution locale, et **en ce qu'**il est de préférence prévu un système d'évaluation (26) qui est conçu de manière à procéder, à partir de la position du signal lumineux reçu au niveau de ladite au moins une unité réceptrice (10) à une conclusion quant à la distance d'un objet dans la zone de détection, et à engendrer un signal de sortie correspondant.

5. Unité à capteur optoélectronique selon l'une des revendications 1 ou 2, **caractérisée en ce qu'**il s'agit d'un capteur de distance, et **en ce qu'**il est de préférence prévu un système d'évaluation (26) qui est conçu de manière à procéder, à partir du temps de parcours de la lumière de détection, à une conclusion quant à l'éloignement d'un objet depuis l'unité à capteur optoélectronique dans la zone de détection (52), et à engendrer un signal de sortie correspondant.

6. Unité à capteur optoélectronique selon l'une des revendications 1 ou 2, **caractérisée en ce qu'**il s'agit d'un scanner de palpage.

7. Unité à capteur optoélectronique selon l'une des revendications 1 à 6, **caractérisée par** un système dans le trajet du rayonnement entre ladite au moins une unité émettrice (50) et le canal de découplage de lumière (46) pour empêcher à la lumière émise de tomber sur le canal de découplage de lumière (46) quand la seconde distance focale est réglée.

8. Unité à capteur optoélectronique selon l'une des revendications 1 à 7, **caractérisée en ce que** le canal de découplage de lumière forme un canal de référence qui, lors du réglage de la première distance focale, guide la lumière émise par ladite au moins une unité émettrice (50) en direction de ladite au moins une unité réceptrice (10).

9. Unité à capteur optoélectronique selon l'une des revendications 1 à 8, **caractérisée en ce que** le canal de découplage de lumière comprend un guide d'onde (46).

10. Unité à capteur optoélectronique selon les revendications 8 et 9, **caractérisée en ce qu'**une ouverture du guide d'onde (46) se trouve dans le trajet du rayonnement de la lumière de détection, et l'autre ouverture du guide d'onde est tournée en direction de ladite au moins une unité réceptrice (10).

11. Procédé pour le fonctionnement d'un capteur optoélectronique, dans lequel une lumière de détection venant d'au moins une unité émettrice (50) est émise dans une zone de détection (52), et une lumière de détection réfléchie ou réémise depuis la zone de détection est décelée avec au moins une unité réceptrice (10),
**caractérisé en ce que**
avec l'aide d'au moins un réflecteur (18) à distance focale réglable dans le trajet du rayonnement de la lumière de détection (i) on règle la convergence de la lumière de détection, en particulier on la focalise, de telle façon qu'elle tombe le plus complètement possible sur un canal de référence (46), lorsqu'on procède à une mesure de référence, et (ii) on règle la convergence de la lumière de détection, en particulier on la défocalise, de telle façon qu'elle est émise le plus complètement possible jusque dans la zone de détection (52), lorsqu'on procède à une mesure de détection.

12. Procédé selon la revendication 11, **caractérisé en ce que** pendant la mesure de détection, la lumière de détection qui tomberait sur le canal de référence (46) est masquée.

13. Procédé selon l'une des revendications 11 ou 12, **caractérisé en ce que** l'on utilise comme réflecteur un miroir à membrane (18) avec distance focale réglable.

14. Procédé selon l'une des revendications 11 à 13, **caractérisé en ce que** le signal de détection reçu par l'unité réceptrice (10) est évalué pour constater si un objet se trouve dans la zone de détection (52).

15. Procédé selon l'une des revendications 11 à 13, **caractérisé en ce que** le signal de détection reçu par l'unité réceptrice (10) est évalué pour déterminer l'éloignement d'un objet depuis le capteur optoélectronique.

16. Procédé selon la revendication 15, **caractérisé en ce que** l'éloignement est déterminé en utilisant une procédure de triangulation.

17. Procédé selon la revendication 15, **caractérisé en ce que** l'éloignement est déterminé à partir du temps de parcours du signal de détection depuis ladite au moins une unité émettrice jusqu'à ladite au moins une unité réceptrice (10).
